(19) Europäisches Patentamt

European Patent Office

Office européen des brevets

(11) **EP 4 164 157 B1**

(12) # EUROPEAN PATENT SPECIFICATION

(45) Date of publication and mention
of the grant of the patent:
**11.03.2026 Bulletin 2026/11**

(51) International Patent Classification (IPC):
**H04L 1/18** $^{(2023.01)}$   **H04W 72/12** $^{(2023.01)}$

(21) Application number: **21822737.9**

(22) Date of filing: **04.06.2021**

(52) Cooperative Patent Classification (CPC):
**H04L 1/1864; H04L 1/1854;** H04L 5/0044;
H04L 5/0055; H04L 5/0091; H04L 2001/0093;
H04W 72/232; H04W 72/30

(86) International application number:
**PCT/CN2021/098359**

(87) International publication number:
**WO 2021/249302 (16.12.2021 Gazette 2021/50)**

(54) **HYBRID AUTOMATIC REPEAT REQUEST FEEDBACK METHOD, TERMINAL DEVICE AND NETWORK DEVICE**

FEEDBACKVERFAHREN FÜR HYBRIDE AUTOMATISCHE WIEDERHOLUNGSANFRAGE,
ENDGERÄTEVORRICHTUNG UND NETZWERKVORRICHTUNG

PROCÉDÉ DE RÉTROACTION DE DEMANDE DE RÉPÉTITION AUTOMATIQUE HYBRIDE,
DISPOSITIF TERMINAL ET DISPOSITIF RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2020 CN 202010515170**

(43) Date of publication of application:
**12.04.2023 Bulletin 2023/15**

(73) Proprietor: **Vivo Mobile Communication Co., Ltd.
Dongguan, Guangdong 523863 (CN)**

(72) Inventors:
• **LU, Zhi**
**Dongguan, Guangdong 523863 (CN)**
• **LI, Na**
**Dongguan, Guangdong 523863 (CN)**
• **PAN, Xueming**
**Dongguan, Guangdong 523863 (CN)**

(74) Representative: **Conti, Marco
Bugnion S.p.A.
Via di Corticella, 87
40128 Bologna (IT)**

(56) References cited:
EP-B1- 3 319 256          WO-A1-2017/015836
WO-A1-2020/056068    WO-A1-2020/069468
CN-A- 111 148 061        US-A1- 2019 123 923
US-A1- 2020 022 144

• **ERICSSON: "On remaining issues of scheduling
and HARQ management", 3GPP DRAFT;
R1-1805189, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Sanya, China; 20180416 - 20180420, 15
April 2018 (2018-04-15), Mobile Competence
Centre ; 650, route des Lucioles ; F-06921
Sophia-Antipolis Cedex ; France
, XP051427437**

**Description**

**TECHNICAL FIELD**

This application relates to the field of communications technologies, and in particular, to a hybrid automatic repeat request (HARQ) feedback method, a terminal device, and a network device.

**BACKGROUND**

In the mobile communication system, user equipment (User Equipment, UE, also referred to as a terminal device, or the like) needs to perform a hybrid automatic repeat request (Hybrid Automatic Repeat Request, HARQ) feedback on a physical downlink shared channel (Physical Downlink Shared Channel, PDSCH) or some physical downlink control channels (Physical Downlink Control Channel, PDCCH) sent in the downlink. The HARQ feedback is transmitted over a physical uplink control channel (Physical Uplink Control Channel, PUCCH) or a physical uplink shared channel (Physical Uplink Shared Channel, PUSCH).

EP 3319256 B1 discloses a acknowledgement information sending method, which includes: receiving, by a receiving device, unicast data and multicast data sent by a sending device in a same subframe; determining, by the receiving device, a feedback resource according to a data receiving status and a resource mapping relationship, where the data receiving status includes a receiving status of the unicast data and a receiving status of the multicast data, and the resource mapping relationship is used to indicate a mapping relationship between the data receiving status and the feedback resource; and sending, by the receiving device, acknowledgement information to the sending device by using the feedback resource, to notify the sending device of the receiving status of the unicast data and the receiving status of the multicast data.

US 2020022144 A1 discloses a method of operating a UE to transmit a physical uplink shared channel (PUSCH), which includes receiving a configuration for a number of bits for a field that indicates a parameter in a first downlink control information (DCI) format; and receiving a physical downlink control channel (PDCCH) that provides either the first DCI format scheduling the PUSCH or a second DCI format scheduling the PUSCH. The second DCI format includes a field with a predetermined number of bits that indicates the parameter. A minimum number of bits for the field in the first DCI format is smaller than the predetermined number of bits for the field in the second DCI format.

WO 2020069468 A1 discloses UE, which includes a Radio Frequency (RF) interface, and processing circuitry coupled to the RF interface, the processing circuitry to: determine that the UE is configured with a feature of multiple Physical Uplink Control Channel (PUCCH) resources with HARQ-ACK feedback within a slot; determine a Physical Uplink Control Channel (PUCCH) resource to carry Hybrid Automatic Repeat Request Acknowledgment (HARQ-ACK) feedback in response to a scheduled Physical Downlink Shared Channel (PDSCH) resource; and encode for transmission to a NR evolved NodeB (gNodeB) the PUCCH resource, the PUCCH resource to carry the HARQ-ACK feedback and: another PUCCH resource carrying Uplink Control Information (UCI) other than HARQ-ACK feedback, and a scheduled Physical Uplink Shared Channel (PUSCH) resource.

The multicast PDSCH may be scheduled by using a multicast broadcast single-frequency network mechanism or multicast downlink control information (Downlink Control Information, DCI), but the HARQ feedback is not supported in related technologies, so the transmission reliability of the multicast PDSCH cannot be guaranteed.

**SUMMARY**

Embodiments of this application provide a hybrid automatic repeat request (HARQ) feedback method, a terminal device, a network device and a readable storage medium as defined in the appended set of claims, so as to solve the problem that the HARQ feedback is not supported when the multicast PDSCH is used.

In this embodiment of this application, the UE-specific physical uplink control channel (PUCCH) resource configured by the network device for the terminal device may be determined as the target PUCCH resource, so as to further perform the HARQ feedback on the target PUCCH resource for the multicast physical downlink shared channel (PDSCH). In this way, when the multicast PDSCH is used, the HARQ feedback of the multicast PDSCH may be supported, thereby improving the transmission reliability of the multicast PDSCH and the system throughput.

**BRIEF DESCRIPTION OF DRAWINGS**

The accompanying drawings illustrated herein are provided to further understand this application and form a part of this application. The exemplary embodiments of this application and the descriptions thereof are used to explain this application and do not constitute an improper limitation on this application. In the accompanying drawings:

FIG. 1 is a schematic flowchart of a first HARQ feedback method according to an embodiment of this application;

FIG. 2 is a schematic flowchart of a second HARQ feedback method according to an embodiment of this application;

FIG. 3 is a schematic diagram of an HARQ feedback mode according to an embodiment of this application;

FIG. 4 is a schematic diagram of another HARQ feedback mode according to an embodiment of this application;

FIG. 5 is a schematic structural diagram of a first terminal device according to an embodiment of this application;

FIG. 6 is a schematic structural diagram of a first network device according to an embodiment of this application;

FIG. 7 is a schematic structural diagram of a second terminal device according to an embodiment of this application; and

FIG. 8 is a schematic structural diagram of a second network device according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

The terms "first", "second", and the like in this specification and claims of this application are used to distinguish between similar objects instead of describing a specific order or sequence. It should be understood that the data used in this way is interchangeable in appropriate circumstances so that the embodiments of this application described can be implemented in other orders than the order illustrated or described herein. In addition, in the specification and claims, "and/or" is used to indicate at least one of connected objects, and the character "/" usually indicates that associated objects are in an "or" relationship.

Technical solutions of this application may be applied to various communications systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a Long Term Evolution/Long Term Evolution Advanced (Long Term Evolution Advanced, LTE-A) system, and an NR system.

User equipment (UE), also referred to as a mobile terminal (Mobile Terminal), mobile user equipment, or the like, may communicate with one or more core networks through a radio access network (Radio Access Network, RAN). The user equipment may be a terminal device, such as a mobile phone (or referred to as a "cellular" phone) and a computer with the terminal device. For example, the user equipment may be a portable, pocket-sized, handheld, computer built-in, or in-vehicle mobile apparatus, which exchanges voice and/or data with the radio access network.

A network device may also be referred to as a base station, and may be a base transceiver station (Base Transceiver Station, BTS) in GSM or CDMA, or may be a NodeB (NodeB) in WCDMA, or may be an evolved NodeB (evolved NodeB, eNB or e-NodeB) and a 5G base station (gNB) in LTE.

The following describes in detail the technical solutions provided in the embodiments of this application with reference to the accompanying drawings.

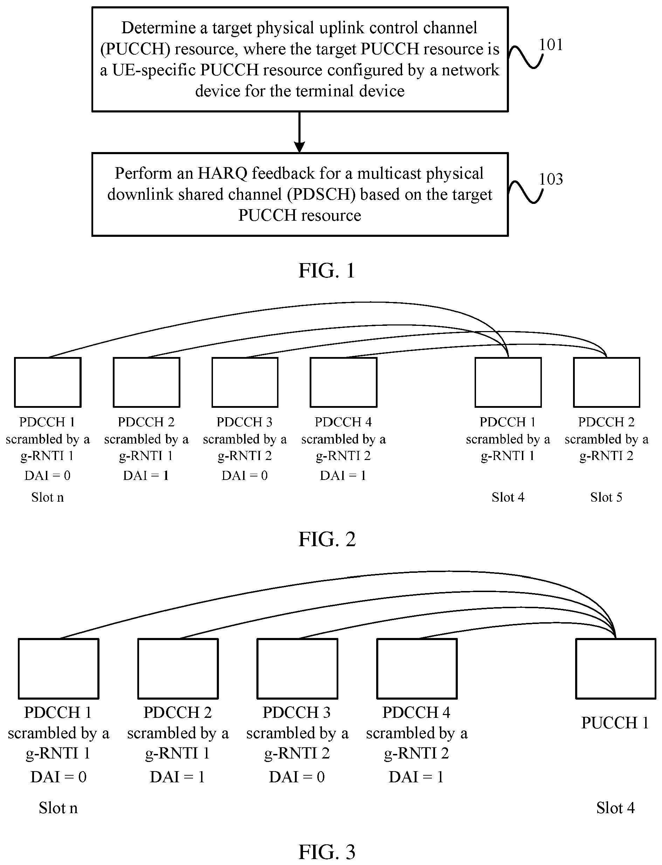

Referring to FIG. 1, an embodiment of this application provides a hybrid automatic repeat request (HARQ) feedback method. The method is performed by a terminal device and includes the following process steps.

Step 101: Determine a target physical uplink control channel (PUCCH) resource, where the target PUCCH resource is a UE-specific PUCCH resource configured by a network device for the terminal device.

Step 103: Perform an HARQ feedback for a multicast physical downlink shared channel (PDSCH) based on the target PUCCH resource.

In this embodiment of this application, the UE-specific physical uplink control channel (PUCCH) resource configured by the network device for the terminal device may be determined as the target PUCCH resource, so as to further perform the HARQ feedback on the target PUCCH resource for the multicast physical downlink shared channel (PDSCH). In this way, when the multicast PDSCH is used, the HARQ feedback of the multicast PDSCH may be supported, thereby improving the transmission reliability of the multicast PDSCH and the system throughput.

Optionally, the multicast PDSCH is a multicast PDSCH corresponding to a multimedia broadcast and multicast service (Multimedia Broadcast and Multicast Service, MBMS) or a multicast broadcast service (Multicast Broadcast Service, MBS).

It should be noted that, in this embodiment of this application, the multicast PDSCH refers to a PDSCH that is sent to a group of terminal devices by using a same physical resource, which may also be referred to as a multi-cast PDSCH, a broadcast PDSCH, or the like.

Optionally, in the HARQ feedback method according to this embodiment of this application, step 101 may be implemented in different methods to be applied to different scenarios. Step 101 may include, but is not limited to at least one of the following methods for determining the target PUCCH resource:

(1) Determine, based on a size of an HARQ payload corresponding to the multicast PDSCH, the target PUCCH resource from a plurality of UE-specific PUCCH resources configured by the network device for the terminal device. (2) Determine the target PUCCH resource based on a control channel element (CCE) index corresponding to multicast downlink control information (DCI) for scheduling a multicast PDSCH. Optionally, the target PUCCH resource is determined based on a minimum (first) or maximum (last) CCE index corresponding to multicast downlink control information (DCI) for scheduling the multicast PDSCH. Alternatively, the target PUCCH resource is determined based on the control channel element (CCE) index corresponding to the multicast downlink control information (DCI) for scheduling the multicast PDSCH and the specific PUCCH resource offset configured by the network device for the terminal device. Optionally, the target PUCCH resource is determined based on the minimum (first) control channel element (CCE) index corresponding to the multicast downlink control information (DCI) for scheduling the multicast PDSCH and the specific PUCCH resource offset configured by the network device for the terminal device. (3) Determine the target PUCCH resource based on resource indication information.

Optionally, in the HARQ feedback method according to this embodiment of this application, the determining mode of the target PUCCH resource is related to an indication field included in the multicast DCI. In some embodiments, a corresponding determining mode of the target PUCCH resource may be determined based on whether there is an indication field in the multicast DCI, and the difference of indicated content in the indication field, which includes but is not limited to the following embodiments.

## Embodiment 1

In Embodiment 1, multicast downlink control information (DCI) for scheduling the multicast PDSCH does not include a PUCCH resource indication (PUCCH Resource Indication, PRI) field. Further, step 101 may be performed as follows:

Determine, based on the size of the HARQ payload corresponding to the multicast PDSCH, the target PUCCH resource from a plurality of UE-specific PUCCH resources configured by the network device for the terminal device, where the size of the HARQ payload corresponding to the multicast PDSCH is within a size range of payloads carried by the target PUCCH resource. This refers to that a target PUCCH resource which can carry the HARQ feedback and occupies the smallest resource is selected based on the size of the HARQ payload corresponding to the multicast PDSCH. Specifically, the plurality of PUCCHs that can be used to carry the HARQ feedback are respectively corresponding to different payload ranges, and based on the size of the HARQ payload corresponding to the multicast PDSCH, a PUCCH resource whose payload range covers the size of the HARQ payload is selected as the target PUCCH resource.

It can be understood that in a case that the multicast DCI for scheduling the multicast PDSCH does not include a PRI field that is used to indicate a concrete PUCCH resource, the target PUCCH resource that is used to achieve the HARQ feedback for the multicast PDSCH may be selected based on the size of the HARQ payload corresponding to the multicast PDSCH from a plurality of UE-specific PUCCH resources configured by the network device. The plurality of UE-specific PUCCH resources may be configured by the network device through higher layer signaling, such as configured through radio resource control (Radio Resource Control, RRC) signaling. In this embodiment, the network device configures a PUCCH resource for each of a group of UEs.

Specifically, the target PUCCH resource determined from the plurality of UE-specific PUCCH resources is corresponding to a payload range that the target PUCCH resource can carry, and the payload range may cover a size of an HARQ payload corresponding to a multicast PDSCH to be subjected to the HARQ feedback.

In some examples, only a hybrid automatic repeat request acknowledgement (Hybrid Automatic Repeat Request Acknowledgement, HARQ-ACK) of the MBMS PDSCH is fed back in a specific slot, or the MBMS HARQ-ACK and the unicast HARQ-ACK are not multiplexed on one HARQ-ACK codebook (codebook, CB). In other words, although UE schedules to feed back multicast PDSCH and the unicast PDSCH in the same slot, HARQ-ACK codebooks thereof are separately constructed and PUCCH resources are separately determined. The network device may configure four UE-specific PUCCH resources for the HARQ-ACK of the MBMS PDSCH fed back by the UE: a first PUCCH resource has a payload range of 1 bit - N0 bits, a second PUCCH resource has a payload range of N0+1 bits - N1 bits, a third PUCCH resource has a payload range of N1+1 bits - N2 bits, and a fourth PUCCH resource has a payload range of N2+1 bits - N3 bits. If the number of bits of the HARQ payload corresponding to the multicast PDSCH that the UE needs to feed back in an uplink slot falls within the range of bits carried in the second PUCCH resource, the UE may use the second PUCCH resource as the target PUCCH resource to transmit the HARQ-ACK.

## Embodiment 2

In Embodiment 2, the multicast DCI for scheduling the multicast PDSCH does not include a PRI field. Further, step 101 may be performed as follows:

Determine the target PUCCH resource based on a control channel element (CCE) index corresponding to multicast downlink control information (DCI) for scheduling a multicast PDSCH.

It can be understood that in a case that the multicast DCI for scheduling the multicast PDSCH does not include a PRI field that is used to indicate a concrete PUCCH resource, the target PUCCH resource of the HARQ feedback of the multicast PDSCH may be accurately determined based on the control channel element (Control Channel Element, CCE) index corresponding to the multicast DCI, so as to support the HARQ feedback of the multicast PDSCH and improve the transmission reliability of the multicast PDSCH.

Optionally, the step of determining the target PUCCH resource based on a CCE index corresponding to multicast DCI for scheduling a multicast PDSCH may be performed as follows:

Based on the CCE index corresponding to the multicast DCI for scheduling the multicast PDSCH and the specific PUCCH resource offset configured by the network device for the terminal device, the target PUCCH resource of the HARQ feedback of the multicast PDSCH is accurately determined.

Optionally, the step of determining the target PUCCH resource based on the CCE index corresponding to the multicast DCI for scheduling the multicast PDSCH and the specific PUCCH resource offset configured by the network device for the terminal device may be performed as follows:

Based on a minimum CCE index corresponding to the multicast DCI for scheduling the multicast PDSCH and the specific PUCCH resource offset configured by the network device for the terminal device, the target PUCCH resource of the HARQ feedback of the multicast PDSCH is accurately determined.

In some examples, when the UE receives a piece of DCI for scheduling the MBMS PDSCH, the target PUCCH resource for feeding back the HARQ-ACK corresponding to the MBMS PDSCH may be determined based on a lowest CCE index for receiving the MBMS PDCCH and a specific PUCCH resource offset configured by the network device for each of a group of UEs. For example, a target PUCCH resource corresponding to UE i in a group of UEs is determined through the function nPUCCH, i = function (nCCE, $\Delta$PUCCH, i) of nCCE and $\Delta$PUCCH, where an example of the function of nCCE and $\Delta$PUCCH may be expressed as nPUCCH, i = nCCE + $\Delta$PUCCH, i, where nPUCCH, i is the target PUCCH resource of the UE i, nCCE is the lowest CCE index of the PDCCH scrambled by a group radio network temporary identifier (group Radio Network Temporary Identifier, g-RNTI), and $\Delta$PUCCH, i is the specific PUCCH resource offset configured by the network device for the UE i.

## Embodiment 3

In Embodiment 3, the multicast DCI for scheduling the multicast PDSCH includes a PRI field. Further, step 101 may be performed as follows:

Determine the target PUCCH resource based on resource indication information carried in the PRI field.

It can be understood that in a case that the multicast DCI for scheduling the multicast PDSCH includes a PRI field that is used to indicate a concrete PUCCH resource, the target PUCCH resource that is used to perform the HARQ feedback on the multicast PDSCH may be directly and explicitly determined based on the resource indication information carried in the PRI field, which is efficient and convenient.

## Embodiment 4

In Embodiment 4, the multicast DCI for scheduling the multicast PDSCH includes a PRI field, and resource indication information carried in the PRI field is used to indicate a first PUCCH resource. Further, step 101 may be performed as follows:

Determine the target PUCCH resource based on the first PUCCH resource and a specific PUCCH resource offset configured by the network device for the terminal device.

It can be understood that in a case that the multicast DCI for scheduling the multicast PDSCH includes a PRI field that is used to indicate a concrete PUCCH resource, the target PUCCH resource of the HARQ feedback of the multicast PDSCH may be determined efficiently and accurately based on the specific PUCCH resource offset configured by the network device for the terminal device and a first PUCCH resource that is used as a baseline and that is explicitly indicated in the resource indication information carried in the PRI field, so as to support the HARQ feedback of the multicast PDSCH and improve the transmission reliability of the multicast PDSCH.

In some examples, when the UE receives a piece of DCI for scheduling the MBMS PDSCH, the PUCCH resource for feeding back the HARQ-ACK of the MBMS PDSCH may be determined based on a concrete PUCCH resource indicated in the PRI field of the PDCCH and the PDCCH resource offset configured by the network device for the UE. For example, a target PUCCH resource corresponding to UE i in a group of UEs is determined through the function nPUCCH, i = function (nPRI, $\Delta$PUCCH, i) of nPRI and $\Delta$PUCCH, where an example of the function of nPRI and $\Delta$PUCCH may be expressed as nPUCCH, i = nPRI + $\Delta$PUCCH, i, where nPUCCH, i is the target PUCCH resource of the UE i, nPRI is a concrete PUCCH resource indicated by scheduling DCI, and $\Delta$PUCCH, i is the specific PUCCH resource offset configured by the network device for the UE i.

**Embodiment 5**

In Embodiment 5, the multicast DCI for scheduling the multicast PDSCH includes a PRI field. Further, step 101 may further be performed as follows:

Determine the target PUCCH resource based on resource indication information carried in the PRI field, a lowest CCE index, and a specific PUCCH resource offset configured by the network device for each of a group of UEs.

Optionally, in the HARQ feedback method according to this embodiment of this application, step 103 may be implemented in different methods to be applied to different scenarios. This includes, but is not limited to the following specific embodiments.

Specific Embodiment 1

In this specific embodiment 1, step 103 may be performed as follows:

Perform, on the same PUCCH resource, an HARQ feedback for a multicast PDSCH corresponding to a same g-RNTI.

It can be understood that in a case that the multicast DCI for scheduling the multicast PDSCH is corresponding to a same g-RNTI, an HARQ feedback may be perform on the same PUCCH resource for a multicast PDSCH corresponding to the g-RNTI.

Specific Embodiment 2

In this specific embodiment 2, step 103 may be performed as follows:

In a case that the multicast DCI for scheduling the multicast PDSCH is corresponding to a plurality of different g-RNTIs, perform, on the same PUCCH resource, an HARQ feedback for a multicast PDSCH corresponding to a same g-RNTI.

It can be understood that in a case that the multicast DCI for scheduling the multicast PDSCH is corresponding to a plurality of different g-RNTIs, on a same PUCCH resource, such as on one slot or sub-slot, the UE does not expect to feed back the HARQ-ACK of the multicast PDSCH scheduled by two or more different g-RNTI scrambled PDCCHs, so only the HARQ feedback of the multicast PDSCH corresponding to the same g-RNTI may be performed on a same PUCCH resource. In other words, the HARQ of multicast PDSCH corresponding to different g-RNTIs may be fed back on PUCCH resources of different slots or sub-slots.

In some examples, as shown in FIG. 2, for a PDCCH 1 and a PDCCH 2 scrambled by the g-RNTI 1, the scheduled HARQ-ACK of the MBS PDSCH is fed back in a slot 4. As for a PDCCH 3 and a PDCCH 4 scrambled by the g-RNTI 2, the scheduled HARQ-ACK of the MBS PDSCH is fed back in a slot 5.

Specific Embodiment 3

In this specific embodiment 3, in a case that the multicast DCI for scheduling the multicast PDSCH is corresponding to a plurality of different g-RNTIs, step 103 may be performed as follows:

Concatenate, based on the target PUCCH resource, HARQ feedbacks of the multicast PDSCH on the same PUCCH resource based on an index of the multicast PDSCH or the plurality of different g-RNTI values.

A concatenating sequence may be agreed by the protocol or configured by the RRC. It is worth pointing out that the network device may also configure another concatenating sequence for the terminal through the RRC, and the terminal concatenates HARQ codebooks based on RRC configuration and performs feedback.

It can be understood that in a case that the multicast DCI for scheduling the multicast PDSCH is corresponding to a plurality of different g-RNTIs, HARQ bits of the multicast PDSCH may be concatenated on the same PUCCH resource based on the index of the multicast PDSCH (such as the index of the MBMS) or the different g-RNTI values, for example, concatenating based on an order of g-RNTI values from small to large or another predefined order.

In some examples, as shown in FIG. 3, the PDCCH 1 and the PDCCH 2 are the MBS PDSCH for scheduling the g-RNTI 1, and the PDCCH 3 and the PDCCH 4 are the MBS PDSCH for scheduling the g-RNTI 2. Accordingly, the HARQ-ACK feedback may be fed back in the PUCCH 1 of the slot 4. Then a bit order of the HARQ-ACK fed back on the PUCCH 1 may be: $O_{ACK,DAI=0}^{g-RNTI1}$, $O_{ACK,DAI=1}^{g-RNTI1}$, $O_{ACK,DAI=0}^{g-RNTI2}$, $O_{ACK,DAI=1}^{g-RNTI2}$.

Optionally, in any of the foregoing specific embodiments (such as the specific embodiment 1 and the specific embodiment 2), the multicast DCI for scheduling the multicast PDSCH includes a downlink assignment index (Downlink Assignment Index, DAI) field, and DAI field values in physical downlink control channels (Physical Downlink Control Channel, PDCCH) of a same g-RNTI are accumulated.

It can be understood that in a case that the multicast DCI for scheduling the multicast PDSCH includes the DAI field, the DAI value in a particular PDCCH that is scrambled by the g-RNTI may be cumulatively counted, that is, DAI accumulation is only performed in DCI with the same g-RNTI value.

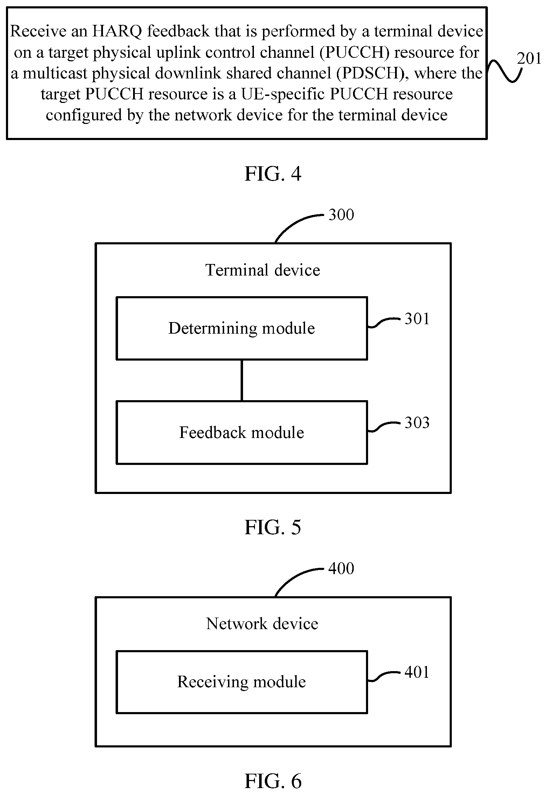

Referring to FIG. 4, an embodiment of this application provides a hybrid automatic repeat request (HARQ) feedback method. The method is performed by a network device and includes the following process steps.

Step 201: Receive an HARQ feedback that is performed by a terminal device on a target physical uplink control channel (PUCCH) resource for a multicast physical downlink shared channel (PDSCH), where the target PUCCH resource is a UE-specific PUCCH resource configured by the network device for the terminal device.

In this embodiment of this application, an HARQ feedback that is performed by a terminal device on a target physical uplink control channel (PUCCH) resource for a multicast physical downlink shared channel (PDSCH) may be received, where the target PUCCH resource is determined by the terminal device based on a UE-specific PUCCH resource that is configured by the network device for the terminal device. In this way, when the multicast PDSCH is used, the HARQ feedback of the multicast PDSCH may be supported, thereby improving the transmission reliability of the multicast PDSCH and the system throughput.

Optionally, the multicast PDSCH is a multicast PDSCH corresponding to a multimedia broadcast and multicast service (Multimedia Broadcast and Multicast Service, MBMS) or a multicast broadcast service (Multicast Broadcast Service, MBS).

It should be noted that, in this embodiment of this application, the multicast PDSCH refers to a PDSCH that is sent to a group of terminal devices by using a same physical resource, which may also be referred to as a multi-cast PDSCH, a broadcast PDSCH, or the like.

Optionally, in the HARQ feedback method according to this embodiment of this application, to ensure the support for the HARQ feedback of the multicast PDSCH, the network device may configure the PUCCH for a group of UEs in different ways. This includes, but is not limited to the following specific embodiments.

### Embodiment 6

In Embodiment 6, multicast downlink control information (DCI) for scheduling the multicast PDSCH does not include a PUCCH resource indication (PRI) field. Further, before step 201, the HARQ feedback method according to this embodiment of this application may further include the following contents:
configuring a plurality of UE-specific PUCCH resources for the terminal device through higher layer signaling, where the plurality of UE-specific PUCCH resources are used for the terminal device to determine the target PUCCH resource based on a size of an HARQ payload corresponding to the multicast PDSCH.

It can be understood that in a case that the multicast DCI for scheduling the multicast PDSCH does not include a PRI field that is used to indicate a concrete PUCCH resource, a plurality of UE-specific PUCCH resources may be configured for the UE through higher layer signaling, such as configured through RRC signaling, so that the terminal device may select, based on the size of the HARQ payload corresponding to the multicast PDSCH, the target PUCCH resource that is used to achieve the HARQ feedback for the multicast PDSCH from a plurality of UE-specific PUCCH resources configured by the network device. In this embodiment, the network device configures a PUCCH resource for each of a group of UEs.

Specifically, the target PUCCH resource determined by the terminal device from the plurality of UE-specific PUCCH resources is corresponding to a payload range that the target PUCCH resource can carry, and the payload range may cover a size of an HARQ payload corresponding to a multicast PDSCH to be subjected to the HARQ feedback.

It should be noted that for the specific content that the terminal device determines the target PUCCH resource based on a size of an HARQ payload corresponding to the multicast PDSCH, reference may be made to the corresponding content in the HARQ feedback method executed by the terminal device, and details are not described herein again.

### Embodiment 7

In Embodiment 7, multicast downlink control information (DCI) for scheduling the multicast PDSCH does not include a PUCCH resource indication (PRI) field. Further, before step 201, the HARQ feedback method according to this embodiment of this application may further include the following contents:
configuring a specific PUCCH resource offset for the terminal device through higher layer signaling, where the specific PUCCH resource offset is used for the terminal device to determine the target PUCCH resource based on a control channel element (CCE) index corresponding to multicast DCI.

It can be understood that in a case that the multicast DCI for scheduling the multicast PDSCH does not include a PRI field that is used to indicate a concrete PUCCH resource, a specific PUCCH resource offset may be configured for the UE through higher layer signaling, such as configured through RRC signaling, so that the terminal device may accurately determine the target PUCCH resource of the HARQ feedback of the multicast PDSCH based on the specific PUCCH resource offset and the CCE corresponding to the multicast DCI, so as to support the HARQ feedback of the multicast PDSCH and improve the transmission reliability of the multicast PDSCH.

It should be noted that for the specific content that the terminal device determines the target PUCCH resource based on the specific PUCCH resource offset and the CCE corresponding to the multicast DCI, reference may be made to the corresponding content in the HARQ feedback method executed by the terminal device, and details are not described herein again.

**Embodiment 8**

In Embodiment 8, the multicast DCI for scheduling the multicast PDSCH includes a PRI field, and resource indication information carried in the PRI field is used to indicate a PUCCH resource used for an HARQ feedback of a multicast PDSCH in each of a group of terminal devices.

It can be understood that a PRI field is set in the multicast DCI for scheduling the multicast PDSCH, and the resource indication information carried in the PRI field is used to directly and explicitly indicate the target PUCCH resource that is used to perform the HARQ feedback on the multicast PDSCH to the terminal device, which is efficient and convenient.

In some examples, the network device may configure the number of bits in the PRI field for the UE. A codepoint in each PRI field may indicate a PUCCH resource used by each of a group of UEs. These resources may be configured through higher layer signaling and then indicated in the DCI. For example, the PRI field is 2 bits. This group of UEs includes n UEs. Further, the PRI field may be used to indicate a PUCCH resource used by each of the group of UEs, as shown in the following table:

| Codepoint in the PRI field | UE 1 | UE 2 | UE 3 | UE 4 | ... | UE n |
|---|---|---|---|---|---|---|
| 00 | $n_{PRI}^{1}$ | $n_{PRI}^{2}$ | $n_{PRI}^{3}$ | $n_{PRI}^{4}$ | ... | $n_{PRI}^{n}$ |
| 01 | $n_{PRI}^{1a}$ | $n_{PRI}^{2a}$ | $n_{PRI}^{3a}$ | $n_{PRI}^{4a}$ | | $n_{PRI}^{na}$ |
| 10 | $n_{PRI}^{1b}$ | $n_{PRI}^{2b}$ | $n_{PRI}^{3b}$ | $n_{PRI}^{4b}$ | | $n_{PRI}^{nb}$ |
| 11 | $n_{PRI}^{1c}$ | $n_{PRI}^{2c}$ | $n_{PRI}^{3c}$ | $n_{PRI}^{4c}$ | | $n_{PRI}^{nc}$ |

**Embodiment 9**

In Embodiment 9, the multicast DCI for scheduling the multicast PDSCH includes a PRI field, and resource indication information carried in the PRI field is used to indicate a first PUCCH resource, where the first PUCCH resource is used for the terminal device to determine the target PUCCH resource based on a specific PUCCH resource offset configured by the network device.

It can be understood that a PRI field is set in the multicast DCI for scheduling the multicast PDSCH, and a first PUCCH resource that is used as a baseline is explicitly indicated to the terminal device through the resource indication information carried in the PRI field, so that the terminal device efficiently and accurately determines the target PUCCH resource of the HARQ feedback of the multicast PDSCH based on the first PUCCH resource and the specific PUCCH resource offset configured for the terminal device, so as to support the HARQ feedback of the multicast PDSCH.

Optionally, in the HARQ feedback method according to this embodiment of this application, the target PUCCH resource may also be determined by the terminal device based on resource indication information carried in the PRI field, a lowest CCE index, and a specific PUCCH resource offset configured by the network device for each of a group of UEs.

It can be learned from the above that, the determining mode of the target PUCCH resource is related to an indication field included in the multicast DCI.

Optionally, in the HARQ feedback method according to this embodiment of this application, the multicast DCI for scheduling the multicast PDSCH is corresponding to a plurality of different group radio network temporary identifiers (g-RNTI).

Optionally, step 201 may be implemented in different methods to be applied to different scenarios. This may include, but is not limited to the following specific embodiments.

Specific Embodiment a

In this specific embodiment a, step 201 may be performed as follows:

Receive an HARQ feedback that is performed by the terminal device on the same target PUCCH resource for a multicast PDSCH corresponding to a same g-RNTI.

It can be understood that, in a case that the multicast DCI for scheduling the multicast PDSCH is corresponding to a plurality of different g-RNTIs, an HARQ feedback that is performed on a multicast PDSCH corresponding to a same g-RNTI may be received on a same target PUCCH resource determined by the terminal device, such as on one slot or sub-slot. In other words, the HARQ of multicast PDSCH corresponding to different g-RNTIs may be fed back on a same PUCCH resource of different slots or sub-slots.

Specific Embodiment b

In this specific embodiment b, step 201 may be performed as follows:

Receive HARQ feedbacks of the multicast PDSCH that are concatenated by the terminal device on the target PUCCH resource based on an index of the multicast PDSCH or the plurality of different g-RNTI values.

A concatenating sequence may be agreed by the protocol or configured by the RRC. It is worth pointing out that the network device may also configure another concatenating sequence for the terminal through the RRC, and the terminal concatenates HARQ codebooks based on RRC configuration and performs feedback.

It can be understood that in a case that the multicast DCI for scheduling the multicast

PDSCH is corresponding to a plurality of different g-RNTIs, HARQ feedbacks of the multicast PDSCH that are concatenated by the terminal device on the target PUCCH resource of the terminal device based on an index of the multicast PDSCH (such as the index of the MBMS) or the different g-RNTI values, for example, the HARQ feedback of concatenating based on an order of g-RNTI values from small to large or another predefined order, where the concatenate sequence may be configured by RRC signaling.

Optionally, in any of the foregoing specific embodiments, the multicast DCI for scheduling the multicast PDSCH includes a downlink assignment index (DAI) field, and DAI field values in physical downlink control channels (PDCCH) of a same g-RNTI are accumulated.

It can be understood that in a case that the multicast DCI for scheduling the multicast PDSCH includes the DAI field, the DAI value in a particular PDCCH that is scrambled by the g-RNTI may be cumulatively counted, that is, DAI accumulation is only performed in DCI with the same g-RNTI value.

Referring to FIG. 5, an embodiment of this application provides a terminal device 300. The terminal device 300 includes: a determining module 301 and a feedback module 303.

The determining module 301 is configured to determine a target physical uplink control channel (PUCCH) resource, where the target PUCCH resource is a UE-specific PUCCH resource configured by a network device for the terminal device; and the feedback module 303 is configured to perform, on the target PUCCH resource, an HARQ feedback for a multicast physical downlink shared channel (PDSCH).

Optionally, in the terminal device 300 according to this embodiment of this application, the determining module 301 is specifically configured to implement at least one of the following determining modes:

determining, based on the size of the HARQ payload corresponding to the multicast PDSCH, the target PUCCH resource from a plurality of UE-specific PUCCH resources configured by the network device for the terminal device; determining the target PUCCH resource based on a control channel element (CCE) index corresponding to multicast downlink control information (DCI) for scheduling a multicast PDSCH; and determining the target PUCCH resource based on resource indication information.

Optionally, in the terminal device 300 according to this embodiment of this application, the determining mode of the target PUCCH resource is related to an indication field included in the multicast DCI.

Optionally, in the terminal device 300 according to this embodiment of this application, the determining module 301 may be specifically configured to:

in a case that the multicast downlink control information (DCI) for scheduling the multicast PDSCH does not include a PUCCH resource indication (PRI) field, determine, based on the size of the HARQ payload corresponding to the multicast PDSCH, the target PUCCH resource from a plurality of UE-specific PUCCH resources configured by the network device for the terminal device, where the size of the HARQ payload corresponding to the multicast PDSCH is within a size range of payloads carried by the target PUCCH resource.

Optionally, in the terminal device 300 according to this embodiment of this application, the determining module 301 may be specifically configured to:

in a case that the multicast DCI for scheduling the multicast PDSCH does not include a PRI field, determine the target PUCCH resource based on a control channel element (CCE) index corresponding to multicast downlink control information (DCI) for scheduling a multicast PDSCH.

Optionally, in the terminal device 300 according to this embodiment of this application, the determining module 301 may be specifically configured to:

in a case that the multicast DCI for scheduling the multicast PDSCH includes a PRI field, determine the target PUCCH resource based on resource indication information carried in the PRI field.

Optionally, in the terminal device 300 according to this embodiment of this application, the determining module 301 may be specifically configured to:

in a case that the multicast DCI for scheduling the multicast PDSCH includes a PRI field, and resource indication information carried in the PRI field is used to indicate a first PUCCH resource, determine the target PUCCH resource based on the first PUCCH resource and a specific PUCCH resource offset configured by the network device for the terminal device.

Optionally, in the terminal device 300 according to this embodiment of this application, the feedback module 303 may be specifically configured to:

in a case that the multicast DCI for scheduling the multicast PDSCH is corresponding to a plurality of different group radio network temporary identifiers (g-RNTI), perform, on the same target PUCCH resource, an HARQ feedback for a multicast PDSCH corresponding to a same g-RNTI.

Optionally, in the terminal device 300 according to this embodiment of this application, the feedback module 303 may be specifically configured to:

in a case that the multicast DCI for scheduling the multicast PDSCH is corresponding to a plurality of different g-RNTIs, concatenate HARQ feedbacks of the multicast PDSCH on the target PUCCH resource based on an index of the multicast PDSCH or the plurality of different g-RNTI values.

Optionally, in the terminal device 300 according to this embodiment of this application, the multicast DCI for scheduling the multicast PDSCH includes a downlink assignment index (DAI) field, and DAI field values in physical downlink control channels (PDCCH) of a same g-RNTI are accumulated.

It can be understood that the terminal device 300 provided in this embodiment of this application can implement the hybrid automatic repeat request (HARQ) feedback method performed by the terminal device 300, and relevant descriptions of the hybrid automatic repeat request (HARQ) feedback method is applicable to the terminal device 300. Details are not described herein again.

In this embodiment of this application, the UE-specific physical uplink control channel (PUCCH) resource configured by the network device for the terminal device may be determined as the target PUCCH resource, so as to further perform the HARQ feedback on the target PUCCH resource for the multicast physical downlink shared channel (PDSCH). In this way, when the multicast PDSCH is used, the HARQ feedback of the multicast PDSCH may be supported, thereby improving the transmission reliability of the multicast PDSCH and the system throughput.

Referring to FIG. 6, an embodiment of this application provides a network device 400, and the network device 400 includes:

a receiving module 401, configured to receive an HARQ feedback that is performed by a terminal device on a target physical uplink control channel (PUCCH) resource for a multicast physical downlink shared channel (PDSCH), where the target PUCCH resource is a UE-specific PUCCH resource configured by the network device for the terminal device.

Optionally, the network device 400 according to this embodiment of this application may further include:

a first configuring module, configured to: in a case that the multicast downlink control information (DCI) for scheduling the multicast PDSCH does not include a PUCCH resource indication (PRI) field, before the receiving an HARQ feedback that is performed by a terminal device on a target physical uplink control channel (PUCCH) resource for a multicast physical downlink shared channel (PDSCH), configure a plurality of UE-specific PUCCH resources for the terminal device through higher layer signaling, where the plurality of UE-specific PUCCH resources are used for the terminal device to determine the target PUCCH resource based on a size of an HARQ payload corresponding to the multicast PDSCH.

Optionally, the network device 400 according to this embodiment of this application may further include:

a second configuring module, configured to: in a case that the multicast downlink control information (DCI) for scheduling the multicast PDSCH does not include a PUCCH resource indication (PRI) field, before the receiving an HARQ feedback that is performed by a terminal device on a target physical uplink control channel (PUCCH) resource for a multicast physical downlink shared channel (PDSCH), configure a specific PUCCH resource offset for the terminal device through higher layer signaling, where the specific PUCCH resource offset is used for the terminal device to determine the target PUCCH resource based on a control channel element (CCE) index corresponding to the multicast DCI.

Optionally, in the network device 400 according to this embodiment of this application, the multicast DCI for scheduling the multicast PDSCH includes a PRI field, and resource indication information carried in the PRI field is used to indicate a PUCCH resource used for an HARQ feedback of a multicast PDSCH in each of a group of terminal devices.

Optionally, in the network device 400 according to this embodiment of this application, the multicast DCI for scheduling the multicast PDSCH includes a PRI field, and resource indication information carried in the PRI field is used to indicate a first PUCCH resource, where the first PUCCH resource is used for the terminal device to determine the target PUCCH resource based on a specific PUCCH resource offset configured by the network device.

Optionally, in the network device 400 according to this embodiment of this application, the receiving module 401 may be specifically configured to:

in a case that the multicast DCI for scheduling the multicast PDSCH is corresponding to a plurality of different group radio network temporary identifiers (g-RNTI), receive an HARQ feedback that is performed by the terminal device on the same target PUCCH resource for a multicast PDSCH corresponding to a same g-RNTI.

Optionally, in the network device 400 according to this embodiment of this application, the receiving module 401 may be specifically configured to:

in a case that the multicast DCI for scheduling the multicast PDSCH is corresponding to a plurality of different g-RNTIs, receive HARQ feedbacks of the multicast PDSCH that are concatenated by the terminal device on the target PUCCH resource based on an index of the multicast PDSCH or the plurality of different g-RNTI values.

Optionally, in the network device 400 according to this embodiment of this application, the multicast DCI for scheduling the multicast PDSCH includes a downlink assignment index (DAI) field, and DAI field values in physical downlink control channels (PDCCH) of a same g-RNTI are accumulated.

It can be understood that the network device 400 provided in this embodiment of this application can implement the hybrid automatic repeat request (HARQ) feedback method performed by the network device 400, and relevant descriptions of the hybrid automatic repeat request (HARQ) feedback method is applicable to the network device 400. Details are not described herein again.

In this embodiment of this application, an HARQ feedback that is performed by a terminal device on a target physical uplink control channel (PUCCH) resource for a multicast physical downlink shared channel (PDSCH) may be received, where the target PUCCH resource is determined by the terminal device based on a UE-specific PUCCH resource that is configured by the network device for the terminal device. In this way, when the multicast PDSCH is used, the HARQ feedback of the multicast PDSCH may be supported, thereby improving the transmission reliability of the multicast PDSCH and the system throughput.

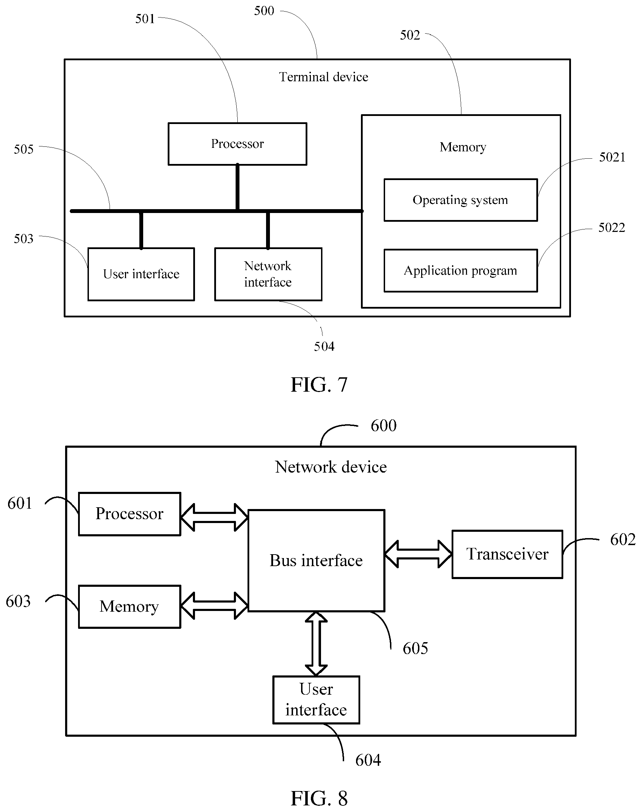

FIG. 7 is a block diagram of a terminal device according to another embodiment of this application. As shown in FIG. 7, a terminal device 500 includes: at least one processor 501, a memory 502, at least one network interface 504, and a user interface 503. All components in the terminal device 500 are coupled together through a bus system 505. It can be understood that the bus system 505 is configured to implement connection and communication between these components. In addition to a data bus, the bus system 505 further includes a power bus, a control bus, and a status signal bus. However, for clear description, various buses are marked as the bus system 505 in FIG. 7.

The user interface 503 may include a display, a keyboard, a clicking device (for example, a mouse, a trackball (trackball)), a touch panel, a touchscreen, or the like.

It can be understood that the memory 502 in this embodiment of this application may be a volatile memory or a nonvolatile memory, or may include both a volatile memory and a nonvolatile memory. The nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), which is used as an external cache. Through illustrative but not restrictive instructions, RAM with a plurality of forms may be used, for example, a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synchlink DRAM (Synchlink DRAM, SLDRAM) and a direct rambus RAM (Direct Rambus RAM, DRRAM). The memory 502 in the system and the method that are described in the embodiments of this application is to include but is not limited to these memories and a memory of any other proper type.

In some implementations, the memory 502 stores the following elements: an executable module or a data structure, or a subset thereof, or an extension set thereof: an operating system 5021 and an application program 5022.

The operating system 5021 includes various system programs, for example, a framework layer, a kernel library layer, and a driver layer, and is configured to implement various basic services and process a hardware-based task. The application program 5022 includes various application programs, for example, a media player (Media Player) and a browser (Browser), and is used to implement various application services. A program for implementing the method according to this embodiment of this application may be included in the application program 5022.

In this embodiment of this application, the terminal device 500 further includes a program or an instruction stored in the memory 502 and executable on the processor 501, and when the program or the instruction is executed by the processor 501, the following steps are implemented:

determining a target physical uplink control channel (PUCCH) resource, where the target PUCCH resource is a UE-specific PUCCH resource configured by a network device for the terminal device; and performing, on the target PUCCH resource, an HARQ feedback for a multicast physical downlink shared channel (PDSCH).

In this embodiment of this application, the UE-specific physical uplink control channel (PUCCH) resource configured by the network device for the terminal device may be determined as the target PUCCH resource, so as to further perform the HARQ feedback on the target PUCCH resource for the multicast physical downlink shared channel (PDSCH). In this way, when the multicast PDSCH is used, the HARQ feedback of the multicast PDSCH may be supported, thereby improving the transmission reliability of the multicast PDSCH and the system throughput.

The method according to the foregoing embodiments of this application may be applied to the processor 501, or may be implemented by the processor 501. The processor 501 may be an integrated circuit chip having a signal processing capability. During implementation, each step of the foregoing method may be completed by using an integrated logic circuit of hardware in the processor 501 or an instruction in a form of software. The foregoing processor 501 may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished through a hardware decoding processor, or may be executed and accomplished by using a combination of hardware and software modules in the decoding processor. The software module may be located in a computer-readable storage medium that is mature in the art, such as a random access memory, a flash memory, a read-only memory, a programmable read-only memory, an electrically erasable programmable memory, or a register. The computer-readable storage medium is located in the memory 502, and the processor 501 reads information from the memory 502 and completes the steps of the foregoing method in combination with hardware of the processor 501. Specifically, the computer-readable storage medium stores a computer program, and when the computer program is executed by the processor 501, steps of the hybrid automatic repeat request (HARQ) feedback method embodiment are implemented.

It can be understood that the embodiments described in the embodiments of this application may be implemented by hardware, software, firmware, middleware, microcode, or a combination thereof. For hardware implementation, the processing unit may be implemented in one or more application specific integrated circuits (Application Specific Integrated Circuits, ASIC), a digital signal processor (Digital Signal Processor, DSP), a DSP device (DSP Device, DSPD), a programmable logic device (Programmable Logic Device, PLD), a field-programmable gate array (Field-Programmable Gate Array, FPGA), a general purpose processor, a controller, a microcontroller, a microprocessor, another electronic unit configured to perform the functions described in this application, or a combination thereof.

For implementation with software, the technologies in the embodiments of this application may be implemented through modules (for example, procedures or functions) that perform the functions in the embodiments of this application. A software code may be stored in the memory and executed by the processor. The memory may be implemented in the processor or outside the processor.

The terminal device 500 can implement processes implemented by the terminal device in the foregoing method embodiments. To avoid repetition, details are not described herein again.

Optionally, an embodiment of this application further provides a terminal device, including a processor, a memory, and a program or an instruction stored in the memory and executable on the processor. When the program or the instruction is executed by the processor, the processes of the hybrid automatic repeat request (HARQ) feedback method embodiment are implemented, and a same technical effect can be achieved. To avoid repetition, details are not described herein again.

An embodiment of this application further provides a readable storage medium, where the readable storage medium stores a program or an instruction, and when the program or the instruction is executed by a processor, the processes of the hybrid automatic repeat request (HARQ) feedback method embodiment that is applied to a terminal device are implemented and a same technical effect can be achieved. To avoid repetition, details are not described herein again.

The processor is a processor in the network device in the foregoing embodiments. The readable storage medium includes a computer-readable storage medium such as a read-only memory (Read-Only Memory, ROM), a random access memory (Random Access Memory, RAM), a magnetic disk, an optical disc, or the like.

Referring to FIG. 8, FIG. 8 is a structural diagram of a network device according to an embodiment of this application, so that details of the foregoing hybrid automatic repeat request (HARQ) feedback method can be implemented, and a same effect can be achieved. As shown in FIG. 8, a network device 600 includes a processor 601, a transceiver 602, a memory 603, a user interface 604, and a bus interface 605.

In this embodiment of this application, the network device 600 further includes a program or an instruction stored in the memory 603 and executable on the processor 601, and when the program or the instruction is executed by the processor 601, the following step is implemented:
receiving an HARQ feedback that is performed by a terminal device on a target physical uplink control channel (PUCCH) resource for a multicast physical downlink shared channel (PDSCH), where the target PUCCH resource is a UE-specific PUCCH resource configured by the network device for the terminal device.

In this embodiment of this application, an HARQ feedback that is performed by a terminal device on a target physical uplink control channel (PUCCH) resource for a multicast physical downlink shared channel (PDSCH) may be received, where the target PUCCH resource is determined by the terminal device based on a UE-specific PUCCH resource that is configured by the network device for the terminal device. In this way, when the multicast PDSCH is used, the HARQ feedback of the multicast PDSCH may be supported, thereby improving the transmission reliability of the multicast PDSCH and the system throughput.

In FIG. 8, a bus architecture may include any quantity of interconnected buses and bridges, and is specifically linked by various circuits of one or more processors represented by the processor 601 and a memory represented by the memory 603. The bus architecture may further link various other circuits such as a peripheral device, a voltage regulator, and a power management circuit together. These are all well-known in the art, and therefore are not further described in this specification. The bus interface 605 provides an interface. The transceiver 602 may be a plurality of elements, in other words, includes a transmitter and a receiver, and provides a unit configured to communicate with various other apparatuses on a transmission medium. For different user equipment, the user interface 604 may be further an interface capable of connecting externally and internally a required device. The connected device includes, but is not limited to a keypad, a display, a speaker, a microphone, a joystick, and the like.

The processor 601 is responsible for managing the bus architecture and common processing, and the memory 603 may store data used when the processor 601 performs an operation.

Optionally, an embodiment of this application further provides a network device, including a processor, a memory, and a program or an instruction stored in the memory and executable on the processor. When the program or the instruction is executed by the processor, the processes of the hybrid automatic repeat request (HARQ) feedback method embodiment are implemented, and a same technical effect can be achieved. To avoid repetition, details are not described herein again.

An embodiment of this application further provides a readable storage medium, where the readable storage medium stores a program or an instruction, and when the program or the instruction is executed by a processor, the processes of the hybrid automatic repeat request (HARQ) feedback method embodiment that is applied to a network device are implemented and a same technical effect can be achieved. To avoid repetition, details are not described herein again.

The processor is a processor in the network device in the foregoing embodiments. The readable storage medium includes a computer-readable storage medium such as a read-only memory (Read-Only Memory, ROM), a random access memory (Random Access Memory, RAM), a magnetic disk, an optical disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations. The foregoing specific implementations are merely schematic instead of restrictive.

## Claims

1. A hybrid automatic repeat request, HARQ, feedback method, performed by a terminal device, and the method comprises:

   determining (101) a target physical uplink control channel, PUCCH, resource, wherein the target PUCCH resource is a UE-specific PUCCH resource configured by a network device for the terminal device; and
   performing (103), on the target PUCCH resource, an HARQ feedback procedure for multicast physical downlink shared channels, PDSCHs;

wherein a multicast downlink control information, DCI, for scheduling the multicast PDSCHs is corresponding to a plurality of different group radio network temporary identifiers, G-RNTIs, wherein

the performing (103), on the target PUCCH resource, an HARQ feedback procedure on a multicast physical downlink shared channels, PDSCHs, comprises:

performing, on the same target PUCCH resource, an HARQ feedback procedure for multicast PDSCHs corresponding to a same G-RNTI;

or

concatenating, based on an order of values of the plurality of different G-RNTIs, HARQ feedback codebooks of the multicast PDSCHs, and transmitting the concatenated HARQ feedback codebooks on the target PUCCH resource.

2. The method according to claim 1, wherein the determining a target physical uplink control channel, PUCCH, resource comprises at least one of the following determining modes:

determining, based on a size of an HARQ payload corresponding to the multicast PDSCHs, the target PUCCH resource from a plurality of UE-specific PUCCH resources configured by the network device for the terminal device;

determining the target PUCCH resource based on a control channel element, CCE, index corresponding to the multicast DCI; and

determining the target PUCCH resource based on resource indication information.

3. The method according to claim 2, wherein determining mode of the target PUCCH resource is related to an indication field comprised in the multicast DCI.

4. The method according to claim 3, wherein in a case that the multicast downlink control information, DCI, for scheduling the multicast PDSCHs does not comprise a PUCCH resource indication, PRI, field, the determining (101) a target physical uplink control channel, PUCCH, resource comprises:

determining, based on the size of the HARQ payload corresponding to the multicast PDSCHs, the target PUCCH resource from the plurality of UE-specific PUCCH resources configured by the network device for the terminal device, wherein the size of the HARQ payload corresponding to the multicast PDSCHs is within a size range of payloads carried by the target PUCCH resource;

or,

determining the target PUCCH resource based on the CCE index corresponding to the multicast DCI for scheduling the multicast PDSCHs.

5. The method according to claim 3, wherein in a case that the multicast DCI for scheduling the multicast PDSCHs comprises a PRI field, the determining a target physical uplink control channel, PUCCH, resource comprises: determining the target PUCCH resource based on resource indication information carried in the PRI field.

6. The method according to claim 3, wherein in a case that the multicast DCI for scheduling the multicast PDSCH comprises a PRI field, the determining a target physical uplink control channel, PUCCH, resource comprises: determining the target PUCCH resource based on resource indication information carried in the PRI field and a specific PUCCH resource offset configured by the network device for the terminal device, the resource indication information being used to indicate a first PUCCH resource.

7. The method according to claim 1, wherein the multicast DCI for scheduling the multicast PDSCHs comprises a downlink assignment index, DAI, field, and a value of the DAI field is an accumulated value of physical downlink control channels, PDCCHs, with the same G-RNTI.

8. A hybrid automatic repeat request, HARQ, feedback method, performed by a network device, and the method comprises:

receiving (201) an HARQ feedback codebook that is transmitted by a terminal device on a target physical uplink control channel, PUCCH, resource for multicast physical downlink shared channels, PDSCHs, wherein the target PUCCH resource is a UE-specific PUCCH resource configured by the network device for the terminal device;

wherein a multicast downlink control information, DCI, for scheduling the multicast PDSCHs is corresponding to a plurality of different group radio network temporary identifiers, G-RNTIs, wherein

the receiving (201) an HARQ feedback that is transmitted by a terminal device on a target physical uplink control channel, PUCCH, resource for multicast physical downlink shared channels, PDSCHs, comprises:

receiving an HARQ feedback that is transmitted by the terminal device on the same target PUCCH resource for multicast PDSCHs corresponding to a same G-RNTI;

or,

receiving, on the target PUCCH resource, concatenated HARQ feedback codebooks that are obtained by concatenating, based on an order of values of the plurality of different G-RNTIs, HARQ feedback codebooks of the multicast PDSCHs.

9. The method according to claim 8, wherein the multicast DCI for scheduling the multicast PDSCHs does not comprise a PUCCH resource indication, PRI, field, wherein

before the receiving (201) an HARQ feedback codebook that is transmitted by a terminal device on a target physical uplink control channel, PUCCH, resource for multicast physical downlink shared channels, PDSCHs, the method further comprises:

configuring a plurality of UE-specific PUCCH resources for the terminal device through higher layer signaling, wherein the plurality of UE-specific PUCCH resources are used for the terminal device to determine the target PUCCH resource based on a size of an HARQ payload corresponding to the multicast PDSCH;

or,

configuring a specific PUCCH resource offset for the terminal device through higher layer signaling, wherein the specific PUCCH resource offset is used for the terminal device to determine the target PUCCH resource based on a control channel element, CCE, index corresponding to the multicast DCI.

10. The method according to claim 8, wherein the multicast DCI for scheduling the multicast PDSCHs comprises a PRI field; wherein,

resource indication information carried in the PRI field is used to indicate a PUCCH resource used for performing an HARQ feedback procedure for the multicast PDSCHs in each of a group of terminal devices.

11. The method according to claim 8, wherein the multicast DCI for scheduling the multicast PDSCH comprises a PRI field; wherein

the resource indication information carried in the PRI field is used to indicate a first PUCCH resource, wherein the first PUCCH resource is used for the terminal device to determine the target PUCCH resource based on a specific PUCCH resource offset configured by the network device.

12. The method according to claim 8, wherein the multicast DCI for scheduling the multicast PDSCHs comprises a downlink assignment index, DAI, field, and a value of the DAI field is an accumulated value of physical downlink control channels, PDCCHs, with the same G-RNTI.

13. A terminal device, comprising: a memory, a processor, and a program or an instruction stored in the memory and executable on the processor, wherein when the program or the instruction is executed by the processor, steps of the method according to any one of claims 1 to 7 are implemented.

14. A network device, comprising a memory, a processor, and a program or an instruction stored in the memory and executable on the processor, wherein when the program or the instruction is executed by the processor, steps of the method according to any one of claims 8 to 12 are implemented.

15. A readable storage medium, wherein the readable storage medium stores a program or an instruction, and when the program or the instruction is executed by a processor, steps of the method according to any one of claims 1 to 7 are implemented, or when the program or the instruction is executed by a processor, steps of the method according to any one of claims 8 to 12 are implemented.

**Patentansprüche**

1. Feedbackverfahren für hybride automatische Wiederholungsanfrage, HARQ, das von einer Endgerätevorrichtung durchgeführt wird, und das Verfahren umfasst:

   Bestimmen (101) einer physikalischen Ziel-Uplink-Steuerkanal-, PDCCH-, Ressource, wobei die Ziel-PDCCH-Ressource eine UE-spezifische PDCCH-Ressource ist, die durch eine Netzwerkvorrichtung für die Endgerätevorrichtung konfiguriert ist; und
   Durchführen (103) einer HARQ-Feedback-Prozedur für gemeinsam genutzte physikalische Multicast-Downlink-Kanäle, PDSCHs, auf der Ziel-PDCCH-Ressource;
   wobei Multicast-Downlink-Steuerinformationen, DCI, zum Planen der Multicast-PDSCHs einer Vielzahl von verschiedenen temporären Gruppenfunknetzkennungen, G-RNTIs, entsprechen, wobei
   das Durchführen (103) einer HARQ-Feedback-Prozedur auf gemeinsam genutzte physikalische Multicast-Downlink-Kanäle, PDSCHs, auf der Ziel-PDCCH-Ressource, umfasst:

   Durchführen einer HARQ-Feedback-Prozedur für Multicast-PDSCHs, die demselben G-RNTI entsprechen, an derselben Ziel-PDCCH-Ressource;
   oder
   Verketten von HARQ-Feedback-Codebüchern der Multicast-PDSCHs auf Grundlage einer Reihenfolge von Werten der Vielzahl von verschiedenen G-RNTIs und Übertragen der verketteten HARQ-Feedback-Codebücher auf der Ziel-PDCCH-Ressource.

2. Verfahren nach Anspruch 1, wobei das Bestimmen einer physikalischen Ziel-Uplink-Steuerkanal-, PDCCH-, Ressource mindestens einen der folgenden Bestimmungsmodi umfasst:

   Bestimmen der Ziel-PDCCH-Ressource aus einer Vielzahl von UE-spezifischen PDCCH-Ressourcen, die durch die Netzwerkvorrichtung für die Endgerätevorrichtung konfiguriert sind, auf Grundlage einer Größe einer HARQ-Nutzlast, die den Multicast-PDSCHs entspricht;
   Bestimmen der Ziel-PDCCH-Ressource auf Grundlage eines Steuerkanalelement-, CCE-, Index, der dem Multicast-DCI entspricht; und
   Bestimmen der Ziel-PDCCH-Ressource auf Grundlage von Ressourcenanzeigeinformationen.

3. Verfahren nach Anspruch 2, wobei sich der Bestimmungsmodus der Ziel-PDCCH-Ressource auf ein Anzeigefeld bezieht, das in dem Multicast-DCI enthalten ist.

4. Verfahren nach Anspruch 3, wobei in einem Fall, dass die Multicast-Downlink-Steuerinformationen, DCI, zum Planen der Multicast-PDSCHs kein PDCCH-Ressourcenanzeige-, PRI-, Feld umfassen, das Bestimmen (101) einer physikalischen Ziel-Uplink-Steuerkanal-, PDCCH-, Ressource Folgendes umfasst:

   Bestimmen der Ziel-PDCCH-Ressource aus der Vielzahl von UE-spezifischen PDCCH-Ressourcen, die durch die Netzwerkvorrichtung für die Endgerätevorrichtung konfiguriert sind, auf Grundlage der Größe der HARQ-Nutzlast, die den Multicast-PDSCHs entspricht, wobei die Größe der HARQ-Nutzlast, die den Multicast-PDSCHs entspricht, innerhalb eines Größenbereichs von Nutzlasten liegt, die durch die Ziel-PDCCH-Ressource mitgeführt werden;
   oder
   Bestimmen der Ziel-PDCCH-Ressource auf Grundlage des CCE-Index, der dem Multicast-DCI entspricht, zum Planen der Multicast-PDSCH.

5. Verfahren nach Anspruch 3, wobei in einem Fall, dass das Multicast-DCI zum Planen der Multicast-PDSCHs ein PRI-Feld umfasst, das Bestimmen einer physikalischen Ziel-Uplink-Steuerkanal-, PDCCH-, Ressource Folgendes umfasst:
   Bestimmen der Ziel-PDCCH-Ressource auf Grundlage von Ressourcenanzeigeinformationen, die in dem PRI-Feld mitgeführt werden.

6. Verfahren nach Anspruch 3, wobei in einem Fall, dass das Multicast-DCI zum Planen der Multicast-PDSCHs ein PRI-Feld umfasst, das Bestimmen einer physikalischen Ziel-Uplink-Steuerkanal-, PDCCH-, Ressource Folgendes umfasst:
   Bestimmen der Ziel-PDCCH-Ressource auf Grundlage von Ressourcenanzeigeinformationen, die in dem PRI-Feld mitgeführt werden, und eines spezifischen PDCCH-Ressourcenversatzes, der durch die Netzwerkvorrichtung für die Endgerätevorrichtung konfiguriert ist, wobei die Ressourcenanzeigeinformationen verwendet werden, um eine erste PDCCH-Ressource anzuzeigen.

7.  Verfahren nach Anspruch 1, wobei das Multicast-DCI zum Planen der Multicast-PDSCHs ein Downlink-Zuweisungsindex-, DAI-, Feld umfasst und ein Wert des DAI-Felds ein akkumulierter Wert von physischen Downlink-Steuerkanälen, PDCCHs, mit demselben G-RNTI ist.

8.  Feedbackverfahren für hybride automatische Wiederholungsanfrage, HARQ, das von einer Netzwerkvorrichtung durchgeführt wird, und das Verfahren umfasst:

    Empfangen (201) eines HARQ-Feedback-Codebuchs, das von einer Endgerätevorrichtung auf einer physikalischen Ziel-Uplink-Steuerkanal-, PDCCH-, Ressource für gemeinsam genutzte physikalische Multicast-Downlink-Kanäle, PDSCHs, übertragen wird, wobei
    die Ziel-PDCCH-Ressource eine UE-spezifische PDCCH-Ressource ist, die durch die Netzwerkvorrichtung für die Endgerätevorrichtung konfiguriert ist;
    wobei Multicast-Downlink-Steuerinformationen, DCI, zum Planen der Multicast-PDSCHs einer Vielzahl von verschiedenen temporären Gruppenfunknetzkennungen, G-RNTIs, entsprechen, wobei
    wobei das Empfangen (201) eines HARQ-Feedbacks, das von einer Endgerätevorrichtung auf einer physikalischen Ziel-Uplink-Steuerkanal-, PDCCH-, Ressource für gemeinsam genutzte physikalische Multicast-Downlink-Kanäle, PDSCHs, übertragen wird, umfasst:

    Empfangen eines HARQ-Feedbacks, das von der Endgerätevorrichtung auf derselben Ziel-PDCCH-Ressource für Multicast-PDSCHs, die demselben G-RNTI entsprechen, übertragen wird;
    oder
    Empfangen von verketteten HARQ-Feedback-Codebüchern auf der Ziel-PDCCH-Ressource, die durch Verketten von HARQ-Feedback-Codebüchern der Multicast-PDSCHs auf Grundlage einer Reihenfolge von Werten der Vielzahl von verschiedenen G-RNTIs erhalten werden.

9.  Verfahren nach Anspruch 8, wobei das Multicast-DCI zum Planen der Multicast-PDSCHs kein PDCCH-Ressourcenanzeige-, PRI-, Feld umfasst, wobei
    das Verfahren vor dem Empfangen (201) eines HARQ-Feedback-Codebuchs, das von einer Endgerätevorrichtung auf einer physikalischen Ziel-Uplink-Steuerkanal-, PDCCH-, Ressource für gemeinsam genutzte physikalische Multicast-Downlink-Kanäle, PDSCHs, übertragen wird, ferner Folgendes umfasst:

    Konfigurieren einer Vielzahl von UE-spezifischen PDCCH-Ressourcen für die Endgerätevorrichtung durch Signalisierung mit höherem Pegel, wobei die Vielzahl von UE-spezifischen PDCCH-Ressourcen für die Endgerätevorrichtung verwendet werden, um die Ziel-PDCCH-Ressource auf Grundlage einer Größe einer HARQ-Nutzlast, die dem Multicast-PDSCH entspricht, zu bestimmen;
    oder
    Konfigurieren eines spezifischen PDCCH-Ressourcenversatzes für die Endgerätevorrichtung durch Signalisierung mit höherem Pegel, wobei der spezifische PDCCH-Ressourcenversatz für die Endgerätevorrichtung verwendet wird, um die Ziel-PDCCH-Ressource auf Grundlage eines Steuerkanalelement-, CCE-, Index, der dem Multicast-DCI entspricht, zu bestimmen.

10. Verfahren nach Anspruch 8, wobei das Multicast-DCI zum Planen der Multicast-PDSCHs ein PRI-Feld umfasst; wobei
    Ressourcenanzeigeinformationen, die im PRI-Feld mitgeführt werden, werden verwendet, um eine PDCCH-Ressource anzuzeigen, die zum Durchführen einer HARQ-Feedback-Prozedur für die Multicast-PDSCHs in jeder einer Gruppe von Endgerätevorrichtungen verwendet wird.

11. Verfahren nach Anspruch 8, wobei das Multicast-DCI zum Planen des Multicast-PDSCH ein PRI-Feld umfasst; wobei die im PRI-Feld mitgeführten Ressourcenanzeigeinformationen verwendet werden, um eine erste PUCCH-Ressource anzuzeigen, wobei die erste PUCCH-Ressource für die Endgerätevorrichtung verwendet wird, um die Ziel-PUCCH-Ressource auf Grundlage eines spezifischen PUCCH-Ressourcenversatzes, der durch die Netzwerkvorrichtung konfiguriert ist, zu bestimmen.

12. Verfahren nach Anspruch 8, wobei das Multicast-DCI zum Planen der Multicast-PDSCHs ein Downlink-Zuweisungsindex-, DAI-, Feld umfasst und ein Wert des DAI-Felds ein akkumulierter Wert von physischen Downlink-Steuerkanälen, PDCCHs, mit demselben G-RNTI ist.

13. Endgerätevorrichtung, umfassend: einen Speicher, einen Prozessor und ein Programm oder eine Anweisung, die in dem Speicher gespeichert ist und auf dem Prozessor ausgeführt werden kann, wobei, wenn das Programm oder die Anweisung durch den Prozessor ausgeführt wird, die Schritte des Verfahrens nach einem der Ansprüche 1 bis 7 implementiert werden.

14. Netzwerkvorrichtung, umfassend einen Speicher, einen Prozessor und ein Programm oder eine Anweisung, die in dem Speicher gespeichert ist und auf dem Prozessor ausgeführt werden kann, wobei, wenn das Programm oder die Anweisung durch den Prozessor ausgeführt wird, die Schritte des Verfahrens nach einem der Ansprüche 8 bis 12 implementiert werden.

15. Lesbares Speichermedium, wobei das lesbare Speichermedium ein Programm oder eine Anweisung speichert und, wenn das Programm oder die Anweisung durch einen Prozessor ausgeführt wird, Schritte des Verfahrens nach einem der Ansprüche 1 bis 7 implementiert werden, oder, wenn das Programm oder die Anweisung durch einen Prozessor ausgeführt wird, Schritte des Verfahrens nach einem der Ansprüche 8 bis 12 implementiert werden.

**Revendications**

1. Procédé de rétroaction de demande de répétition automatique hybride, HARQ, exécuté par un dispositif terminal, et le procédé comprend :

   déterminer (101) une ressource de canal physique de commande de liaison montante, PUCCH, cible dans lequel la ressource PUCCH cible est une ressource PUCCH spécifique à un UE configuré par un dispositif réseau pour le dispositif terminal ; et
   exécuter (103), sur la ressource PUCCH cible, une procédure de rétroaction HARQ pour des canaux physiques partagés de liaison descendante, PDSCH, de multidiffusion ;
   dans lequel des informations de commande de liaison descendante, DCI, de multidiffusion pour planifier les PDSCH de multidiffusion correspondent à une pluralité d'identifiants temporaires de réseau radio de groupe, G-RNTI, différents, dans lequel
   l'exécution (103), sur la ressource PUCCH cible, d'une procédure de rétroaction HARQ sur des canaux physiques partagés de liaison descendante, PDSCH, de multidiffusion, comprend :

      exécuter, sur la même ressource PUCCH cible, une procédure de rétroaction HARQ pour des PDSCH de multidiffusion correspondant à un même G-RNTI ;
      ou
      concaténer, sur la base d'un ordre de valeurs de la pluralité de G-RNTI différents, des livres de codes de rétroaction HARQ des PDSCH de multidiffusion, et transmettre les livres de codes de rétroaction HARQ concaténés sur la ressource PUCCH cible.

2. Procédé selon la revendication 1, dans lequel la détermination d'une ressource de canal physique de commande de liaison montante, PUCCH, cible comprend au moins l'un des modes de détermination suivants :

      déterminer, sur la base d'une taille d'une charge utile HARQ correspondant aux PDSCH de multidiffusion, la ressource PUCCH cible à partir d'une pluralité de ressources PUCCH spécifiques à l'UE configurées par le dispositif réseau pour le dispositif terminal ;
      déterminer la ressource PUCCH cible sur la base d'un indice d'élément de canal de commande, CCE, correspondant aux DCI de multidiffusion ; et
      déterminer la ressource PUCCH cible sur la base d'informations d'indication de ressource.

3. Procédé selon la revendication 2, dans lequel le mode de détermination de la ressource PUCCH cible est lié à un champ d'indication compris dans les DCI de multidiffusion.

4. Procédé selon la revendication 3, dans lequel, dans le cas où les informations de commande de liaison descendante, DCI, de multidiffusion pour planifier les PDSCH de multidiffusion ne comprennent pas de champ d'indication de ressource PUCCH, PRI, la détermination (101) d'une ressource de canal physique de commande de liaison montante, PUCCH, cible comprend :

déterminer, sur la base de la taille de la charge utile HARQ correspondant aux PDSCH de multidiffusion, la ressource PUCCH cible à partir de la pluralité de ressources PUCCH spécifiques à l'UE configurées par le dispositif réseau pour le dispositif terminal, dans lequel la taille de la charge utile HARQ correspondant aux PDSCH de multidiffusion se situe dans une plage de tailles de charges utiles transportées par la ressource PUCCH cible ;

ou

déterminer la ressource PUCCH cible sur la base de l'indice CCE correspondant aux DCI de multidiffusion pour planifier les PDSCH de multidiffusion.

5. Procédé selon la revendication 3, dans lequel, dans le cas où les DCI de multidiffusion pour planifier les PDSCH de multidiffusion comprend un champ PRI, la détermination d'une ressource de canal physique de commande de liaison montante, PUCCH, cible comprend :
déterminer la ressource PUCCH cible sur la base des informations d'indication de ressource transportées dans le champ PRI.

6. Procédé selon la revendication 3, dans lequel, dans le cas où les DCI de multidiffusion pour planifier le PDSCH de multidiffusion comprend un champ PRI, la détermination d'une ressource de canal physique de commande de liaison montante, PUCCH, cible comprend :
déterminer la ressource PUCCH cible sur la base des informations d'indication de ressource transportées dans le champ PRI et d'un décalage de ressource PUCCH spécifique configuré par le dispositif réseau pour le dispositif terminal, les informations d'indication de ressource étant utilisées pour indiquer une première ressource PUCCH.

7. Procédé selon la revendication 1, dans lequel les DCI de multidiffusion pour planifier les PDSCH de multidiffusion comprennent un champ d'indice d'attribution de liaison descendante, DAI, et une valeur du champ DAI est une valeur accumulée de canaux physiques de commande de liaison descendante, PUCCH, avec le même G-RNTI.

8. Procédé de rétroaction de demande de répétition automatique hybride, HARQ, exécuté par un dispositif réseau, et le procédé comprend :

recevoir (201) un livre de codes de rétroaction HARQ qui est transmis par un dispositif terminal sur une ressource de canal physique de commande de liaison montante, PUCCH,
cible pour des canaux physiques partagés de liaison descendante, PDSCH, de multidiffusion, dans lequel la ressource PUCCH cible est une ressource PUCCH spécifique à l'UE configurée par le dispositif réseau pour le dispositif terminal ;
dans lequel des informations de commande de liaison descendante, DCI, de multidiffusion pour planifier les PDSCH de multidiffusion correspondent à une pluralité d'identifiants temporaires de réseau radio de groupe, G-RNTI, différents, dans lequel
la réception (201) d'une rétroaction HARQ qui est transmise par un dispositif terminal sur une ressource de canal physique de commande de liaison montante, PUCCH, cible pour des canaux physiques partagés de liaison descendante, PDSCH, de multidiffusion comprend :

recevoir une rétroaction HARQ qui est transmise par le dispositif terminal sur la même ressource PUCCH cible pour les PDSCH de multidiffusion correspondant à un même G-RNTI ;
ou
recevoir, sur la ressource PUCCH cible, des livres de codes de rétroaction HARQ concaténés qui sont obtenus en concaténant, sur la base d'un ordre de valeurs de la pluralité de G-RNTI différents, des livres de codes de rétroaction HARQ des PDSCH de multidiffusion.

9. Procédé selon la revendication 8, dans lequel les DCI de multidiffusion pour planifier les PDSCH de multidiffusion ne comprennent pas de champ d'indication de ressource PUCCH, PRI, dans lequel
avant la réception (201) d'un livre de codes de rétroaction HARQ qui est transmis par un dispositif terminal sur une ressource de canal physique de commande de liaison montante, PUCCH, cible pour des canaux physiques partagés de liaison descendante, PDSCH, de multidiffusion, le procédé comprend en outre :

configurer une pluralité de ressources PUCCH spécifiques à l'UE pour le dispositif terminal par le biais d'une signalisation de couche supérieure, dans lequel la pluralité de ressources PUCCH spécifiques à l'UE sont utilisées pour que le dispositif terminal détermine la ressource PUCCH cible sur la base d'une taille d'une charge utile HARQ correspondant au PDSCH de multidiffusion ;

ou

configurer un décalage de ressource PUCCH spécifique pour le dispositif terminal par le biais d'une signalisation de couche supérieure, dans lequel le décalage de ressource PUCCH spécifique est utilisé pour que le dispositif terminal détermine la ressource PUCCH cible sur la base d'un indice d'élément de canal de commande, CCE, correspondant aux DCI de multidiffusion.

**10.** Procédé selon la revendication 8, dans lequel les DCI de multidiffusion pour planifier les PDSCH de multidiffusion comprennent un champ PRI ; dans lequel les informations d'indication de ressource transportées dans le champ PRI sont utilisées pour indiquer une ressource PUCCH utilisée pour effectuer une procédure de rétroaction HARQ pour les PDSCH de multidiffusion dans chacun d'un groupe de dispositifs terminaux.

**11.** Procédé selon la revendication 8, dans lequel les DCI de multidiffusion pour planifier le PDSCH de multidiffusion comprennent un champ PRI ; dans lequel les informations d'indication de ressource transportées dans le champ PRI sont utilisées pour indiquer une première ressource PUCCH, dans lequel la première ressource PUCCH est utilisée pour que le dispositif terminal détermine la ressource PUCCH cible sur la base d'un décalage de ressource PUCCH spécifique configuré par le dispositif réseau.

**12.** Procédé selon la revendication 8, dans lequel les DCI de multidiffusion pour planifier les PDSCH de multidiffusion comprennent un champ d'indice d'attribution de liaison descendante, DAI, et une valeur du champ DAI est une valeur accumulée de canaux physiques de commande de liaison descendante, PUCCH, avec le même G-RNTI.

**13.** Dispositif terminal, comprenant : une mémoire, un processeur, et un programme ou une instruction stocké(e) dans la mémoire et exécutable sur le processeur, dans lequel, lorsque le programme ou l'instruction est exécuté(e) par le processeur, les étapes du procédé selon l'une quelconque des revendications 1 à 7 sont mises en œuvre.

**14.** Dispositif réseau, comprenant une mémoire, un processeur et un programme ou une instruction stocké(e) dans la mémoire et exécutable sur le processeur, dans lequel, lorsque le programme ou l'instruction est exécuté(e) par le processeur, les étapes du procédé selon l'une quelconque des revendications 8 à 12 sont mises en œuvre.

**15.** Support de stockage lisible, dans lequel le support de stockage lisible stocke un programme ou une instruction, et lorsque le programme ou l'instruction est exécuté(e) par un processeur, les étapes du procédé selon l'une quelconque des revendications 1 à 7 sont mises en œuvre, ou lorsque le programme ou l'instruction est exécuté(e) par un processeur, les étapes du procédé selon l'une quelconque des revendications 8 à 12 sont mises en œuvre.

Determine a target physical uplink control channel
(PUCCH) resource, where the target PUCCH resource is
a UE-specific PUCCH resource configured by a network
device for the terminal device

101

Perform an HARQ feedback for a multicast physical
downlink shared channel (PDSCH) based on the target
PUCCH resource

103

FIG. 1

PDCCH 1
scrambled by a
g-RNTI 1
DAI = 0
Slot n

PDCCH 2
scrambled by a
g-RNTI 1
DAI = 1

PDCCH 3
scrambled by a
g-RNTI 2
DAI = 0

PDCCH 4
scrambled by a
g-RNTI 2
DAI = 1

PDCCH 1
scrambled by a
g-RNTI 1

Slot 4

PDCCH 2
scrambled by a
g-RNTI 2

Slot 5

FIG. 2

PDCCH 1
scrambled by a
g-RNTI 1
DAI = 0

Slot n

PDCCH 2
scrambled by a
g-RNTI 1
DAI = 1

PDCCH 3
scrambled by a
g-RNTI 2
DAI = 0

PDCCH 4
scrambled by a
g-RNTI 2
DAI = 1

PUCCH 1

Slot 4

FIG. 3

Receive an HARQ feedback that is performed by a terminal device on a target physical uplink control channel (PUCCH) resource for a multicast physical downlink shared channel (PDSCH), where the target PUCCH resource is a UE-specific PUCCH resource configured by the network device for the terminal device
201

FIG. 4

300

Terminal device

Determining module
301

Feedback module
303

FIG. 5

400

Network device

Receiving module
401

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3319256 B1
- US 2020022144 A1
- WO 2020069468 A1